**Europäisches Patentamt**

(19) **European Patent Office**

**Office européen des brevets**

(11) Publication number: **0 233 179**
**B1**

(12) **EUROPEAN PATENT SPECIFICATION**

(45) Date of publication of patent specification: **12.07.89**

(51) Int. Cl.⁴: **B 32 B 15/08,** B 32 B 31/06

(21) Application number: **85904891.0**

(22) Date of filing: **17.09.85**

(86) International application number:
**PCT/SE85/00355**

(87) International publication number:
**WO 86/01772 27.03.86 Gazette 86/07**

(54) **SURFACE COATING PROCESS.**

(30) Priority: **18.09.84 SE 8404679**

(43) Date of publication of application:
**26.08.87 Bulletin 87/35**

(45) Publication of the grant of the patent:
**12.07.89 Bulletin 89/28**

(84) Designated Contracting States:
**AT BE CH DE FR GB IT LI NL SE**

(56) References cited:
**DE-A-2 654 667**
**DE-C-2 916 723**
**SE-B- 363 995**
**US-A-3 078 179**

(73) Proprietor: **BECKER INDUSTRIFÄRG AB**
**Box 2041**
**S-195 02 Märsta (SE)**

(72) Inventor: **IBSEN, Leif**
**Svinget 16**
**DK-4840 Alslev (DK)**
Inventor: **NAGLITSCH, Gerulf**
**Tagsta, Alsike**
**S-741 00 Knivsta (SE)**

(74) Representative: **Halldin, Bo et al**
**Dr. Ludwig Brann Patentbyra AB Kungsgatan 3**
**P.O. Box 7524**
**S-103 92 Stockholm (SE)**

Courier Press, Leamington Spa, England.

## Description

The invention relates to a process for surface coating of substrates with plane surfaces, such as coil or sheet materials of metals.

In the process paint- and lacquer materials are applied in one or several layers on the substrate with plane surface. This (these) layer(s) is (are) applied as wet paint layer(s), which in dried state will have a certain degree of thermoplasticity.

If several layers of paint- and lacquer materials are used, the first layer will be a primer coat, such as e.g. an epoxy-, acrylic- or phenolic paint.

As a second layer on the primer coat, a pigmented or unpigmented paint layer may be applied. Examples of such suitable paint materials are fluorocarbon dispersions (PVF), PVC-plastisols, vinyl- or latex paints. Such wet paint is dried after application.

The paints are applied according to conventional techniques, such as roller coating, spray coating, curtain coating etc. The drying is also made with conventional methods, such as IR-tubes or convection heating.

After the paint layer or layers have been dried to a state of a certain degree of thermoplasticity, a plastic sheet or foil is applied directly upon the hot paint surface.

The plastic sheet applied directly upon the hot paint surface by lamination can be of various pore-free suitable foil materials, such as PVC-sheet, PVF-sheet, thermoplastic acrylic sheet etc.

In the lamination an engraved pressure roller can be used to produce an embossing effect. Thereby it is possible, due to the underlying layer or layers of paint- and lacquer maerial, to obtain an embossed sheet surface. These layers have a total thickness of 40-300 µm which allows such embossing.

By the surface coating process according to the invention, a surface with extraordinary hardness and wear resistance is obtained and which, as mentioned above, may be embossed. Further, by means of the surface coaing process according to the present invention, a layer is obtained which provides an extraordinary corrosion protection to the underlying substrate material.

Prior art

It is previously known to treat metal sheet (coi1) by painting with a primer layer and apply a topcoat on top of this. However, only a limited degree of corrosion resistance of metal sheet is thereby obtained, due to a certain porosity in the layer materials. N.S. Makins, J. Oil. Col. Chem. Assoc. 1981, 64, pp 459-460.

It is also previously known to treat the surface of e.g. metal sheet by first applying an adhesive layer of 5-10 µm and then applying a plastic sheet. Even in this case, a limited corrosion resistance is obtained owing to the fact that adhesive layer is so thin. Furthermore it is not possible, as in the present invention, to emboss the plastic sheet by means of a pressure roller. W.V. Titow, PVC Technology, Fourth Edition, 1984, p. 1115.

As materials with plane surfaces which can be treated with the surface coating process according to the present invention, metallic materials such as cold rolled steel, metallized steel, stainless steel, galvanized steel, aluminum etc are suitable.

In the coating of sheet metal materials, the sheet metal is preferably pretreated chemically by usual methods such as pickling, phosphatising, chromating etc.

The layer or layers of paint and lacquer material can consist of one primer layer and a second paint layer which can be pigmented or unpigmented. A suitable combination is to use a pigmented layer of optional colour and then on top of this a clear plastic sheet is applied. Thus a great variety is possible concerning the appearance of the end product, and this as mentioned above, can be further enhanced by an embossing effect obtained by means of an engraved pressure roller used in the lamination of the plastic sheet.

In said lamination the temperature of the metal sheet is 150-300°C.

As emphasized before one of the paint layers can be omitted thus using either only one primer layer or only one paint layer without any underlying primer layer it being observed, however, that the pain layer thickness must be at least 40 µm dry film to provide necessary thickness which allows both good adhesion and possibility to emboss. As mentioned above the paint layer in its dried state must show a certain degree of thermoplasticity.

In the process according to the invention a lamination without the use of any special adhesive is attained in one and the same process and different colours, gloss degrees and surface textures can simply and cheaply be achieved without the necessity of keeping a large assortmen of different plastic sheets in store.

The invention is more closely illustrated in the following examples.

Example 1

In an conventional coil-coating line the following is applied on 0.8 mm hot galvanized steel, chemically pretreated with Bonder 1303 (a phosphatising agent from Metallgesellschaft GmbH, West Germany):

First layer: An acrylic primer (EE212-1002 Coilon Primer from BIFAB, Märsta, Sweden) is applied by reverse roller coat to a thickness of 6-8 µm dry film, drying/curing at 225°C PMT (peak metal temperature) and then cooled.

Second layer: On the previous layer a pigmented polyvinylchloride plastisol paint (FJ220-2403 Coilon Plastisol Umbra from BIFAB, Märsta, Sweden) is applied to a thickness of 70 µm dry film by reverse roller coat, drying/curing at 205°C PMT.

Third layer: Directly upon the previous hot layer, a clear plasticized plastic sheet of polyvinylchloride (Type 1951 from Gislaved AB, Sweden) and a thicknessof 70 µm is applied.

Embossing: After the application of the previous plastic sheet, the coated steel coil passes, without separate cooling, an embossing steel roller which produces a relief pattern and then cooling takes place.

Example 2

The same as Example 1 with the following exception:

Third layer: As plastic sheet is used a clear polyacrylic sheet (Type 2/1033 from Alkor GmbH, West Germany) with a thickness of 60 μm.

Example 3

The same as Example 1 with the following exceptions:

Second layer: On the previous layer a clear (unpigmented) polyvinylchloride plastisol (FJ220 Coilon Plastisol Clear, from BIFAB, Märsta, Sweden) is applied to a thickness of 200 μm dry film by reverse roller coat, drying/curing at 205°C PMT.

Third layer: Directly upon the previous hot layer a soft hiding (pigmented) plastic sheet of polyvinylchloride (Type 1951 pigmented, from Gislaved AB, Sweden) with a thickness of 75 μm is applied.

**Claims**

1. A process for continuous surface coating of materials with plane surfaces characterized in that on the material with the plane surface embossible paint- and lacquer material(s) in form of wet paint is (are) applied in one or several layers each layer being dried (cured) by heating before the application of the next layer, and that the total thickness of the layers is from 40-300 μm, and immediately thereafter a plastic sheet by lamination is applied directly on the hot paint surface.

2. A process according to claim 1, characterized in that a primer coat is applied as the first paint layer when several layers of paint are applied.

3. A process according to claim 1 or 2, characterized in that a pigmented paint material is applied as paint layer.

4. A process according to claim 1 or 2, characterized in that an unpigmented lacquer material is applied as paint layer.

5. A process according to any of the preceding claims, characterized in that the sheet which is laminated to the top paint layer consists of plastic sheet material selected from PVC-sheet, PVF-sheet, or thermoplastic acrylic resin.

6. A process according to any of he preceding claims, characterized in that the material with plane surfaces consists of coil- or sheet material of metal.

7. A process according to any of the preceding claims, characterized in that an embossed sheet surface is produced by carrying out the lamination of the sheet to the paint surface by means of an engraved pressure roller.

**Patentansprüche**

1. Verfahren zum kontinunierlichen Oberflächenbeschichten von Materialien mit ebenen Oberflächen, dadurch gekennzeichnet, daß das Material mit der ebenen Oberfläche prägbare Farb- und Lackmaterialien in Form von feuchten Anstrichen in ein oder mehreren Schichten aufgetragen werden und jede Schicht durch Erwärmen vor dem Auftragen der nächsten Schicht getrocknet (gehärtet) wird, wobei die Gesamtdicke der Schichten 40 bis 300 μm beträgt und unmittelbar darauf eine Plastikfolie direkt auf die heiße Farboberfläche auflaminiert wird.

2. Verfahren gemäß Anspruch 1, dadurch gekennzeichnet, daß eine Grundierung als erste Farbschicht aufgebracht wird, sofern mehrere Farbschichten aufgebracht werden.

3. Verfahren gemäß Anspruch 1 oder 2, dadurch gekennzeichnet, daß ein pigmentiertes Farbmaterial als Farbschicht verwendet wird.

4. Verfahren gemäß Anspruch 1 oder 2, dadurch gekennzeichnet, daß ein unpigmentiertes Lackmaterial als Farbschicht verwendet wird.

5. Verfahren gemäß einem der vorhergehenden Ansprüche, dadurch gekennzeichnet, daß die Folie die auf die Farbschicht laminiert wird aus einem plastischen Folienmaterial, ausgewählt aus einer PVC-Folie, einer PVF-Folie oder einem thermoplastischen Akrylharz, besteht.

6. Verfahren gemäß einem der vorhergehenden Ansprüche, dadurch gekennzeichnet, daß das Material mit ebenen Oberflächen aus metallischem Coil- oder Blattmaterial besteht.

7. Verfahren gemäß einem der vorhergehenden Ansprüche, dadurch gekennzeichnet, daß eine geprägte Blattoberfläche ausgebildet wird, indem man die Laminierung der Folie auf die Farboberfläche mittels einer gravierten Druckwalze vornimmt.

**Revendications**

1. Procédé de revêtement de surface en continu pour des matériaux à surfaces planes, caractérisé en ce que sur le matériau de surface plane, du(des) matériau(x) de laque et de peinture susceptible d'être gravé(s) en impression, sous forme de peinture humide, est (sont) appliqué(s) en une ou plusieurs couches, chaque couche étant séchée (durcie) par chauffage avant l'application de la couche suivante, et en ce que l'épaisseur totale des couches est de 40-300 μm, et immédiatement après, une feuille de plastique est appliquée par lamination directement sur la surface de peinture chaude.

2. Procédé selon la revendication 1, caractérisé en ce qu'une couche d'impression est appliquée comme première couche de peinture lorsque plusieurs couches de peinture sont appliquées.

3. Procédé selon les revendications 1 ou 2, caractérisé en ce qu'un matériau de peinture pigmenté est appliqué comme couche de peinture.

4. Procédé selon les revendications 1 ou 2, caractérisé en ce qu'un matériau, de laque non pigmenté est appliqué comme couche de peinture.

5. Procédé selon l'une quelconque des revendications précédentes, caractérisé en ce que la feuille qui est laminée au sommet de la couche de peinture consiste en un matériau de feuille plastique choisi parmi une feuille de PVC, une feuille de PVF ou une résine acrylique thermoplastique.

6. Procédé selon l'une quelconque des revendications précédentes, caractérisé en ce que le matériau à surfaces planes consiste en un matériau de feuille ou de rouleau de métal.

7. Procédé selon l'une quelconque des revendications précédentes, caractérisé en ce qu'une surface de feuille gravée en impression est produite en effectuant la lamination de la feuille sur la surface de peinture au moyen d'un rouleau à pression gravé.